# EUROPEAN PATENT APPLICATION

(11) **EP 0 567 233 A1**
(43) Date of publication of application: **27.10.1993**
(21) Application number: 93302305.3
(22) Date of filing: 25.03.1993
(51) Int. Cl.: G06F 15/20

(54) **Tape printing apparatus**

(30) Priority: 22.04.1992 JP 130067/92
(71) Applicant: BROTHER KOGYO KABUSHIKI KAISHA, Nagoya-shi, Aichi-ken 467 (JP)
(72) Inventor: Sakuragi, Shoji, c/o Brother Kogyo K. K., Nagoya-shi, Aichi-ken (JP); Ishida, Minako, c/o Brother Kogyo K. K., Nagoya-shi, Aichi-ken (JP); Otsuka, Satomi, c/o Brother Kogyo K. K., Nagoya-shi, Aichi-ken (JP)
(74) Representative: Senior, Alan Murray

(57) **Abstract**

With one-line dot data transferred from a development buffer to a print buffer, a check is made to see if the tallest character in the current line contains at least 100 dots when a local underline (LU) or a local frame (LF) flag is set for that line. The result of the check is used to vary the line width of the underlining or framing accordingly. With the LU or LF subroutine is terminated for all lines in the text, a check is made to see if a global underline (GU) or a global frame (GF) flag is set. If either of the two kinds of global processing is set, a check is made to see if the printable range of the tape comprises 100 dots or more. The result of the check is used to vary the line width of the global underlining or framing accordingly.

## Description

The present invention relates to a tape printing apparatus capable of underline printing or frame printing on part or all of the characters input through the input means, such as a keyboard. More particularly, the invention relates to a tape printing apparatus capable of printing underlines or frames in accordance with the input character size and the width of the tape to be used when determining the print line width for use in underline printing or frame printing.

A number of tape printing apparatuses capable of executing underline printing and frame printing have been proposed, such as the P-Touch@ Models # PT-6, PT-8 or PT-10, manufactured by Brother Industries, Ltd. Typically, the tape printing apparatuses of this kind always prints the underline or frame printing with a constant line width. When characters input from a keyboard or the like are displayed on the display unit, the user merely designates which of the characters are subject to underline or frame printing. With the characters so designated, the tape printing apparatus executes underline or frame printing.

Because the line width is constant, it is highly probable that a discrepancy will occur between the line width on the one hand and the size of the characters to be printed as well as the width of the tape to be used on the other hand. If such a discrepancy occurs, the underline or frame when printed will be made too prominent or too subdued with respect to the printed characters. As a result, the tape is awkwardly produced with a poor appearance.

Typical tape printing apparatuses have a predetermined, limited range of tape widths to choose from. With the tape width selected, there are corresponding constraints on the sizes of characters to be printed and on the number of character lines. The present invention envisages establishing definite correspondences between the size of the characters to be printed and the widths of the tapes to be used on the one hand, and the line widths for use in underline or frame printing on the other. The arrangement when implemented eliminates the conventional constant line width provided for in the prior art tape printing apparatuses, which considerably enhances the operability of the machine.

With the hereinafter described embodiment of tape printing apparatus it is an aim to provide a tape printing apparatus capable of determining, upon printing, the print line width for use in underline or frame printing in correspondence with the size of input characters and the width of the tape to be used, thereby eliminating use of a constant line width and doing away with the awkward discrepancy between character size and underline orframe size when printed, with the result that the tape is produced with a good appearance.

One aspect of the present invention may provide a tape printing apparatus which comprises character input means for inputting characters, printing means for printing onto a tape the characters input through the input means, designating means for designating characters input through the character input means for any one of underline printing and frame printing, detecting means for detecting the size of the characters designated by the designating means, line width storing means for storing both the size of the characters input through the character input means and the line width for use in any one of the underline printing and the frame printing, the size being arranged to correspond with the line width, line width determining means for comparing the character size detected by the detecting means with the content of the line width storing means in order to determine, based on the result of the comparing, the line width for use in any one of the underline printing and frame printing, and print control means for causing the printing means to perform any one of underline printing and frame printing on the designated characters in accordance with the line width determined by the line width determining means based on instructions from the designating means.

In a preferred structure of the above described apparatus , the character input means allows characters to be input for a plurality of lines and the designating means designates the execution of any one of the underline printing and the frame printing on each of the lines input through the character input means. Further, the print control means causes the printing means to perform any one of the underline printing and the frame printing on each line based on the instructions from the designating means. In a further preferred structure according to the present invention, the detecting means detects the maximum character size in each of the lines designated by the designating means.

Another aspect of the present invenion may provide a tape printing apparatus which comprises character input means for inputting characters, printing means for printing the characters inputthrough the input means onto various tapes having a plurality of tape widths, designating means for designating all of the characters input through the character input means for any one of underline printing and frame printing, tape width detecting means for detecting the width of each of the various tapes, line width storing means for storing both the width of each tape and the line width for use in any one of the underline printing and the frame printing, the width of each tape being arranged to correspond with the line width, line width determining means for comparing the tape width detected by the tape width detecting means with the content of the line width storing means in order to determine, based on the result of the comparing, the line width for use in any one of the underline printing and the frame printing, and print control means for causing the printing means to perform anyone of the underline printing and the frame printing on all of the characters in accordance with the line width determined by the line width determining means based on instructions from the designating means.

In operation, the printing apparatus outlined above has the character input means input characters over a plurality of lines. Thereafter, the designating means may issue instructions to execute underline or frame printing on each line. In that case, the detecting means detects the maximum character size of the characters that exist in each line. The line width determining means first compares the detected character size with the content of the line width storing means. Based on the result of the comparison, the line width determining means then determines the line width for use in underline or frame printing.

The print control means causes the printing means to print an underline or a frame on each of the lines designated by the designating means in accordance with the line width determined as described. Thus underline or frame printing is executed on each line by use of the line width determined automatically by the line width determining means.

If the designating means issues instructions to perform underline or frame printing on all of the characters input through the character input means, the tape width detecting means detects the width of the tape to be used. The line width determining means first compares the detected tape width with the content of the line width storing means. Based on the result of the comparison, the line width determining means then determines the line width for use in underline or frame printing.

Thereafter, the print control means causes the printing means to execute underline or frame printing in accordance with the line width determined as described. Thus all characters are subjected to underline or frame printing through the use of the line width determined automatically by the line width determining means.

The present invention will be described with reference to the following drawings, wherein:
Fig. 1 is a plan view of a tape printing apparatus embodying the invention, the apparatus having its storage cover opened to reveal a tape cassette storage portion inside;
Fig. 2 is a plan view of the cassette storage portion of the embodiment as it accommodates a tape cassette;
Fig. 3 is a control block diagram of the tape printing apparatus embodying the present invention;
Fig. 4 is a schematic view describing the contents of a RAM for use with the present invention;
Figs. 5A-5B are a flowchart showing how a tape print control program operates according to the present invention;
Fig. 6 is a flowchart showing how a print processing control program operates according to the present invention;
Fig. 7 is a flowchart showing how a local frame subroutine program operates according to the present invention;
Fig. 8 is a flowchart showing how a local underline subroutine program operates according to the present invention;
Fig. 9 is a flowchart showing how a global frame subroutine control program operates according to the present invention;
Fig. 10 is a flowchart showing how a global underline subroutine program operates according to the present invention; and
Figs. 11A-11G are a set of schematic views illustrating various examples of underlining and framing carried out by various types of processing according to the present invention.

### DETAILED DESCRIPTION OF THE PREFERRED EMBODIMENTS

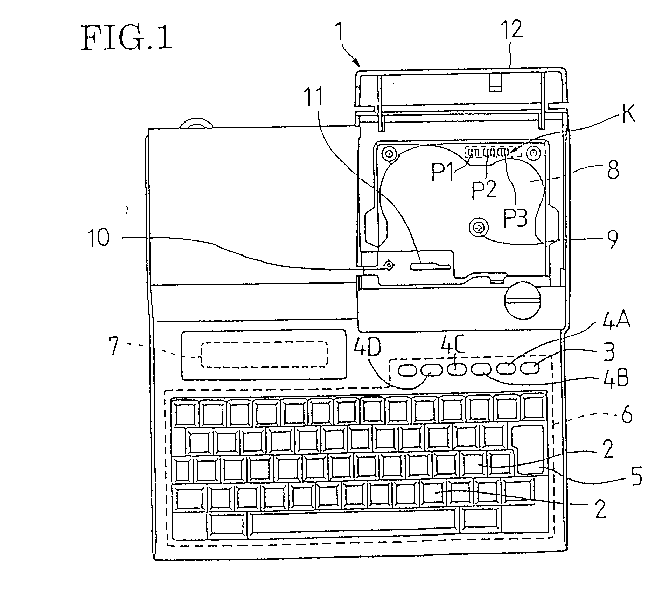

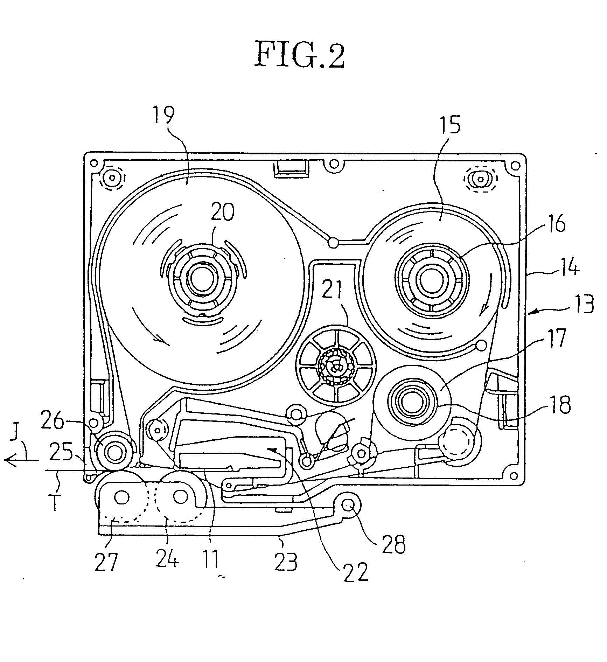

A first preferred embodiment of the invention will now be described with reference to the accompanying drawings. Fig. 1 is a plan view of a tape printing apparatus embodying the present invention, the apparatus having its storage cover 12 opened to reveal a tape cassette storage portion 8 inside. In Fig. 1, the tape printing apparatus 1 comprises character input keys 2 for inputting characters over plurality of lines, a print key 3, a local underline (LU) key 4A for designating underline modifications to a portion of the characters input through the character input keys 2 (e.g., underlining each character line), a local frame (LF) key 4B for similarly designating frame modifications to each character line, a global underline (GU) key 4C for designating underline modification to all of the characters, a global frame (GF) key 4D for designating frame modification to all of the characters, a keyboard 6 that includes various keys such as a return key 5 for designating a line feed or other instructions for various kinds of processing, a liquid crystal display 7 that displays characters and other inputs input through the keyboard 6; and a cassette storage portion 8 that stores a tape cassette 13 (shown in Fig. 2)

As shown in Figs. 1 and 2, the cassette storage portion 8 has a ribbon take-up shaft 9 erected inside, the shaft 9 being driven by a pulse motor (not shown) to rotate a ribbon take-up spool 21 of the tape cassette 13 to take up a thermal ink ribbon 17. Diagonally in front of the ribbon take-up shaft 9 (on the keyboard 6 side) is a tape feed roller shaft 10 rotatably driven via a suitable transmission mechanism by a tape feed motor 40 (not shown and to be described later) to rotate a tape feed roller 27, also to be described later.

In the front of the cassette storage portion 8, a thermal head 11 is fixedly provided. The thermal head 11 prints characters onto a film tape 15 via a thermal ink ribbon 17. Behind the cassette storage portion 8 is a tape width detector K for detecting the widths of various tapes (the width of the tape in each tape cassette 13 is constant) such as the film tape 15 held within the tape cassette 13.

The tape width detector K comprises three photo couplers P1, P2 and P3. When the tape cassette 13 is loaded into the cassette storage portion 8, a discriminating member, provided at the back side of the cassette 13 (but not shown) selectively shields the photo couplers P1, P2 and P3. This allows the tape width detector K to detect the width of the film tape 15 or any other tape contained in the tape cassette 13.

For this embodiment of the invention, five tape widths of the film tape 15 or the like are assumed: 6, 9, 12, 18 and 24 mm. The photo couplers P1, P2 and P3 detect the tape width within the tape cassette 13 according to the combination of a High (H) and a Low (L) signal generated by selectively shielding the three photocouplers P1-P3 with the discriminating member of the cassette 13. The constitution of the tape width detector K is the same as that disclosed in Japanese Patents Application Nos. 3-217860 and 3-217861 and will not be repeated in detail herein.

The cassette storage portion 8 is opened and closed by a storage cover 12 rotatably attached to the back of the tape printing apparatus 1. With the storage cover 12 opened, the tape cassette 13 may be replaced or the cassette storage portion 8 may be otherwise serviced.

The construction of the tape cassette 13 will now be described with reference to Fig. 2. Fig. 2 is a plan view of the cassette storage portion 8 with the tape cassette 13 installed (an upper case is removed from the tape cassette 13 in this view).

In Fig. 2, a lower case 14 of the tape cassette 13 contains a tape spool 16 with the transparent film tape 15 wound around it, a ribbon spool 18 with the thermal ink ribbon 17 wound around it, and an adhesive tape spool 20 with a peel paper-equipped adhesive double-coated tape 19 wound around it with the peel paper facing the outside. The spools 16, 18 and 20 are rotatably supported in cooperation with support parts, not shown, furnished at the bottom of the upper case.

Among the spools 16, 18 and 20, a ribbon take-up spool 21 is also rotatably supported. The ribbon take-up spool 21, engaged with and driven by the ribbon take-up shaft 9, takes up the thermal ink ribbon 17 after it passes through the printing position.

The thermal head 11 mentioned above is inserted into a hole 22 of the lower case 14. Opposite to the thermal head 11 is a platen roller 24 rotatably supported by a roller holder 23, the platen roller 24 being brought into contact with the thermal head 11 as needed. The thermal head 11 has numerous heating elements (specifically, the thermal head 11 of the printing apparatus 1 has 128 heating elements). The heating elements are activated to print characters and the like onto the film tape 15 via the thermal ink ribbon 17.

Close to a tape outlet portion 25 of the lower case 14 (at the bottom left corner in Fig. 2) is a rotatably supported tape pressure contact roller 26. The roller 26 is located opposite to the tape feed roller27 (which is rotatably supported by the roller holder 23), the two rollers 26 and 27 being brought into contact with each other as needed.

In the cassette storage portion 8, in front of the tape cassette 13 (at the bottom in Fig. 2) the roller holder 23 is rotatably supported by a support shaft 28. The roller holder 23 may be switched between a print position and a release position by a manual switching mechanism, not shown (Fig. 2 shows the roller holder 23 in its print position).

The roller holder 23 rotatably holds the platen roller 24 and tape feed roller 27. When switched to the print position, the platen roller 24 comes into contact with the thermal head 11 and the tape feed roller 27 comes into contact with the pressure contact roller 26. The tape feed roller 27 is rotatably driven by the tape feed roller shaft 10 mentioned above. At the same time, the pressure contact roller 26 is rotatably driven by a gear mechanism, not shown.

The pressure contact roller 26 and the tape feed roller 27 cooperate in pressing the free adhesive side of the adhesive double-coated tape 19 onto the film tape 15 on which characters and the like were printed via the thermal ink ribbon 17 by the thermal head 11. The finished tape T is thus created and sent out in the direction of arrow J.

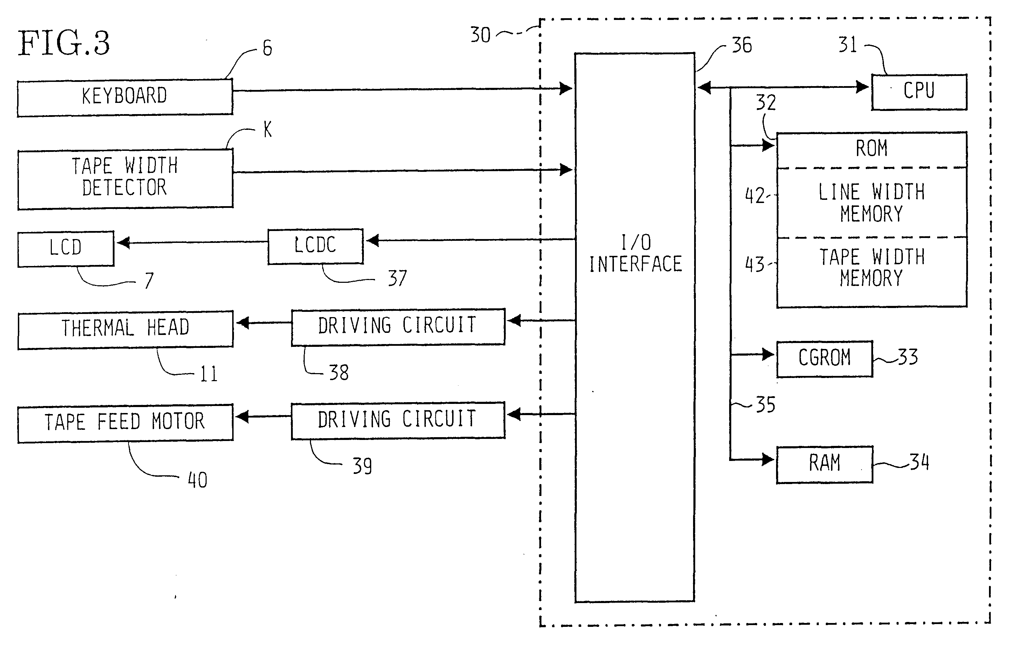

The control system of the tape printing apparatus 1 having the above construction is described with reference to Fig. 3. Fig. 3 is a control block diagram of the tape printing apparatus 1, centering on a controller 30. The controller 30 comprises a CPU 31, a ROM 32, a CGROM 33 and a RAM 34. These parts are interconnected via a bus 35 and are also connected to an input/output interface 36.

The ROM 32 stores a tape print control program, a print processing program, a local frame (LF) subroutine program, a local underline (LU) subroutine program, a global frame (GF) subroutine program, a global underline (GU) subroutine program, and other control programs for controlling the tape printing apparatus 1. The CPU 31 carries out various kinds of processing based on the diverse programs in the ROM 32.

The ROM 32 includes a line width memory 42 and a tape width memory 43. The line width memory 42 has two memory regions. One memory region stores in tabular form the sizes (dot counts in the longitudinal direction) of characters in correspondence with the line widths for use in underline or frame printing; the other memory region stores, also in tabular form, the tape widths detected by the tape width detector K in correspondence with the line widths for use in underline or frame printing.

The tape width memory 43 stores, in tabular form, combinations of the H and L signals generated by the photo couplers P1, P2 and P3 of the tape width detector K in correspondence with the tape widths to choose from. Also stored in tabular form in the tape width memory 43 are the tape widths in correspondence with the dot counts indicating the printable range of each tape width selected.

The CGROM 33 stores dot pattern data associated with the characters input through the keyboard 6. Appropriate dot pattern data are read out of the CGROM 33 and transferred to a development buffer 44.

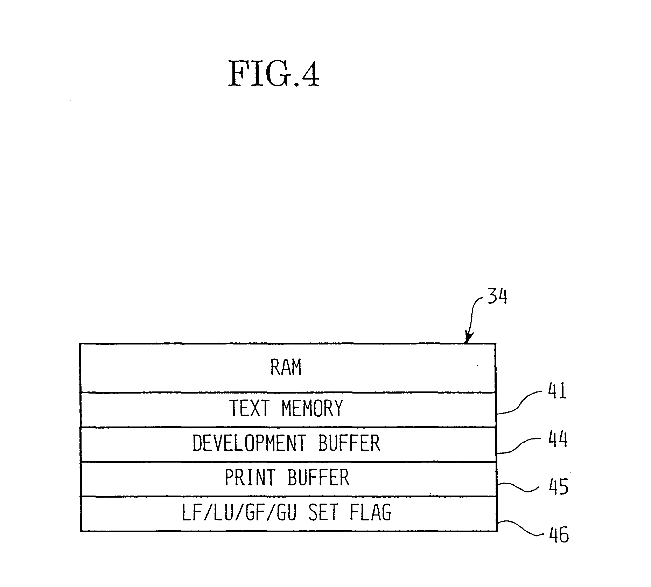

The RAM 34 temporarily stores the results of various computations performed by the CPU 31. As depicted in Fig. 4, the RAM 34 contains various memory regions. In Fig. 4, a text memory 41 stores consecutively, as text data, the code data corresponding to the characters that are input through the keyboard 6. The development buffer 44 stores the dot pattern data that are developed therein after being read from the CGROM 33 in conjunction with the character code data held in the text memory 41. A print buffer 45 stores the dot data transferred thereto from the development buffer 44 upon printing. It is the dot data held in the print buffer45 that the thermal head 11 refers to in carrying out dot printing.

The LF, LU, GF and GU set flags 46 are used to call the local frame (LF) subroutine, the local underline (LU) subroutine, the global frame (GF) subroutine and the global underline (GU) subroutine, respectively. Pressing the LF key 4B, LU key 4A, GF key 4D or GU key 4C sets the LF flag, the LU flag, the GF flag or the GU flag, respectively. Pressing the LF, LU, GF or GU keys 4A-4D again turns off the corresponding flag.

The control block diagram of Fig. 3 is again referenced here to describe more of the control aspect of the embodiment. The keyboard 6, the liquid crystal display 7 and a display controller 37 are connected to the controller 30 via the I/O interface 36. When characters are input through the keyboard 6, the character data are stored consecutively into the text memory 41. At the same time, the dot patterns corresponding to the characters input via the keyboard 6 are displayed on the liquid crystal display 7 based on a dot pattern generation control program and a display control program.

The thermal head 11 is driven by a driving circuit 38 to print the dot data transferred from the development buffer 44 to the print buffer 45. In synchronism with the dot data transfer, the tape feed motor 40 feeds the tape T via the driving circuit 49.

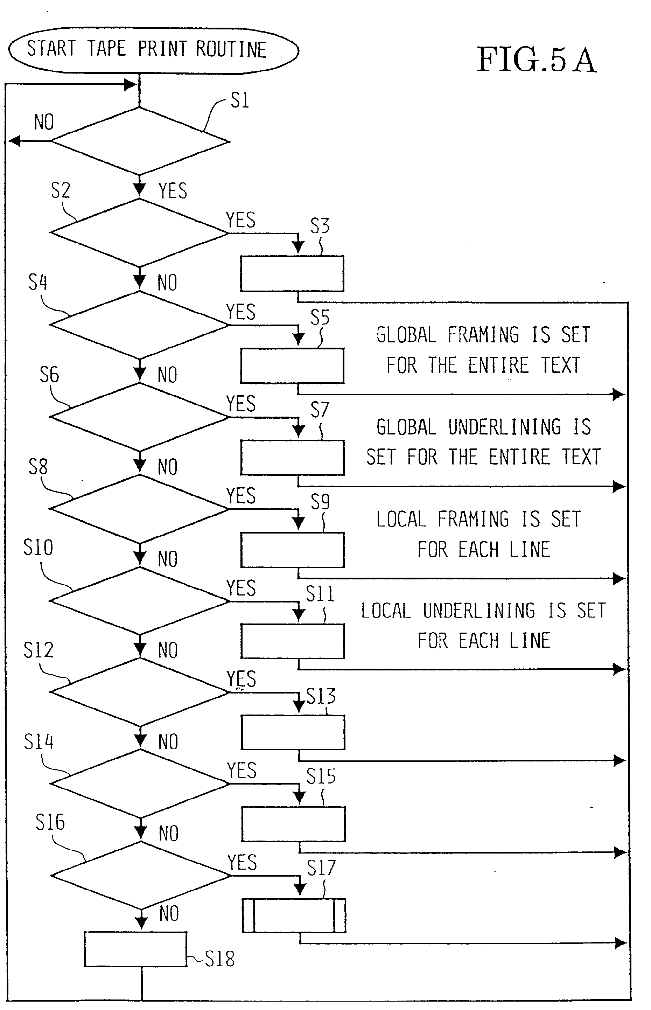

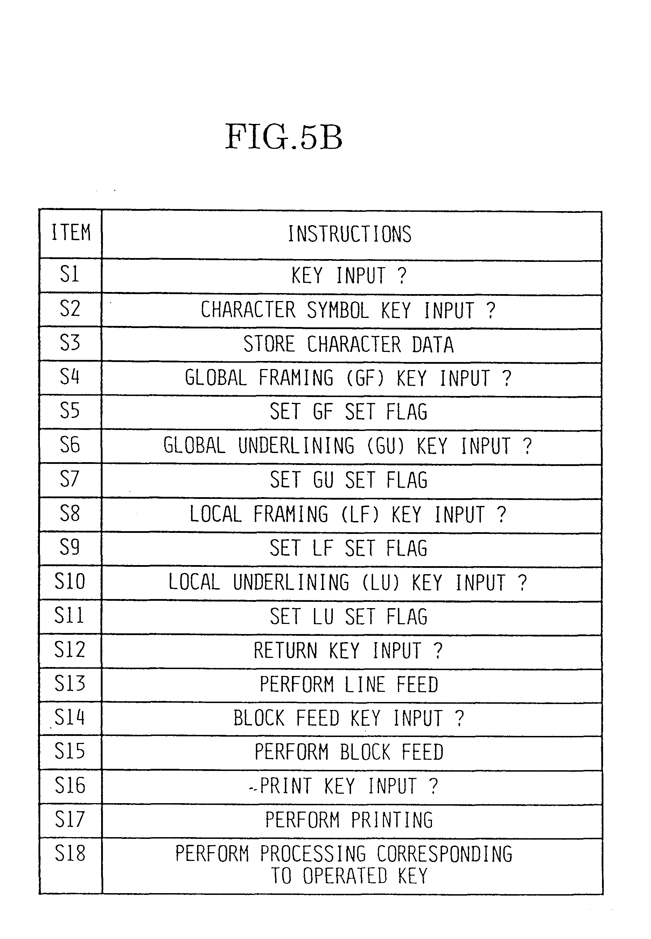

The operation of the tape printing apparatus having the above construction is described with reference to Figs. 5Athrough 11. Figs. 5Aand 5B is a flowchart showing how the tape print control program operates. Step S1 checks to see if any key input is made from the keyboard 6. If a key input is recognized (i.e., if the result of the check in step S1 is affirmative), step S2 is reached. Step S2 checks to see if the key input comes from any of the character input keys 2. If the result of the check in step S1 is negative, such key input is awaited.

If the key input comes from the character input keys 2 (i.e., if the result of the check in step S2 is affirmative), step S3 is reached. In step S3, the text memory 41 stores consecutively the character code data corresponding to the input characters, and a text is created from the data before returning to step S1. At this point, text such as one shown in Fig. 11A is created and displayed on the liquid crystal display 7.

If the key input is not from the character input keys 2 (i.e., if the result of the check in step S2 is negative), step S4 is reached. Step S4 checks to see if the key input comes from the GF key 4D. If the key input comes from the GF key 4D (i.e., if the result of the check in step S4 is affirmative), step S5 is reached. Step S5 sets the GF flag before returning to step S1. At this point, global frame (GF) processing is set for the entire text.

If step S4 finds the key input to come from other than the GF key 4D (i.e., if the result of the check in step S4 is negative), step S6 is reached. Step S6 checks to see if the key input comes from the GU key 4C. If the key input comes from the GU key 4C (i.e., if the result of the check in step S6 is affirmative), step S7 is reached. Step S7 sets the GU flag before returning to step S1. At this point, global underline (GU) processing is set for the entire text.

If step S6 finds the key input to come from other than the GU key 4C (i.e., if the result of the check in step S6 is negative), step S8 is reached. Step S8 checks to see if the key input comes from the LF key 4B. If the key input comes from the LF key 4B (i.e., if the result of the check in step S8 is affirmative), step S9 is reached. Step S9 sets the LF flag before returning to step S1. At this point, LF processing is set for the line about to be input or being currently input.

If steps S8 finds the key input to come from other than the LF key 4B (i.e., if the result of the check in step S8 is negative), step S10 is reached. Step S10 checks to see if the key input comes from the LU key 4A. If the key input comes from the LU key 4A (i.e., if the result of the check in step S10 is affirmative), step S11 is reached. Step S11 sets the LU flag before returning to step S1. At this point, LU processing is set for the line about to be input or being currently input.

If step S10 finds the key input to come from other than the LU key 4A (i.e., if the result of the check in step S10 is negative), step S12 is reached. Step S12 checks to see if the key input comes from the return key 5 as a line feed command. If the key input comes from the return key 5 as the line feed command (i.e., if the result of the check in step S12 is affirmative), step S13 is reached. Step S13 performs a line feed before returning to step S1.

If step S12 finds the key input to come from other than the return key 5 (i.e., if the result of the check in step S12 is negative), step S14 is reached. Step S14 checks to see ifthe key input comes from a block feed key, not shown. The block feed key, when pushed, enters a block feed marker illustratively between block A and block B, as indicated by broken line in Fig. 11A. If the key input comes from the block feed key (i.e., if the result of the check in step S14 is affirmative), step S15 is reached. Step S15 performs block feed processing before returning to step S1.

If step S14 finds the key input to come from other than the block feed key (i.e., if the result of the check in step S14 is negative), step S16 is reached. Step S16 checks to see if the key input comes from the print key 3. If the key input comes from the print key 3 (i.e., if the result of the check in step S16 is affirmative), step S17 is reached. Step S17 performs printing, as will be described in detail below, before returning to step S1. If step S16 finds the key input to come from other than the print key 3 (i.e., if the result of the check in step S16 is negative), step S18 is reached. Step S18 carries out any other processing associated with the key that was actually operated, and then returns to step S1.

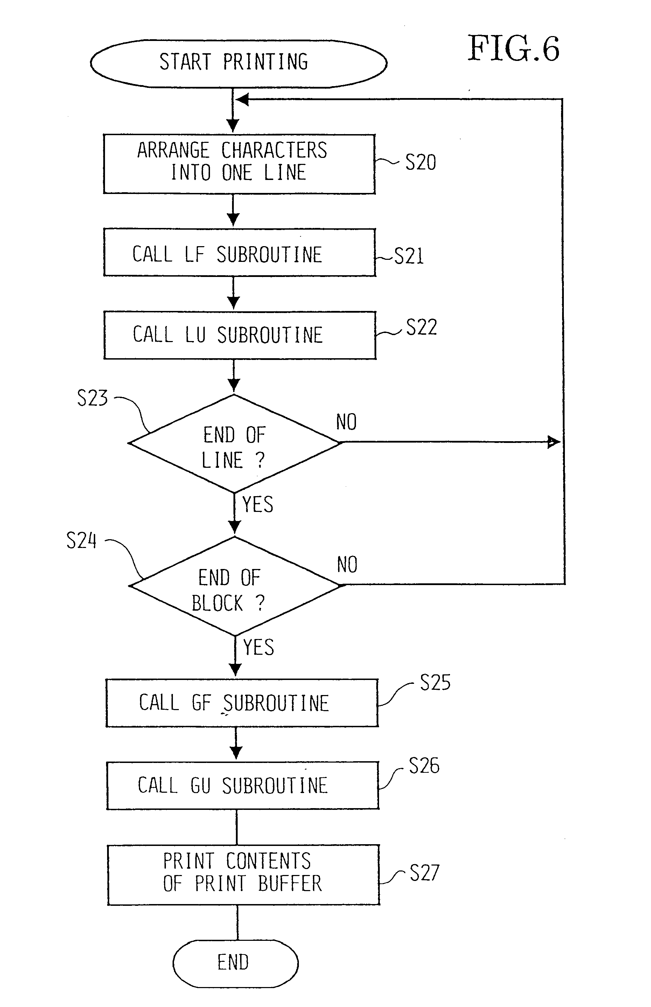

The printing operation of step S17 is described with reference to Fig. 6. Fig. 6 is a flowchart showing how the print processing control program operates. The dot data in the development buffer 44 comprises those character data in the text memory 41 which were developed into dot data form. In step S20, these dot data are transferred from the development buffer 44 to the one-line print buffer45. Step S20 is followed by step S21 which calls the LF subroutine.

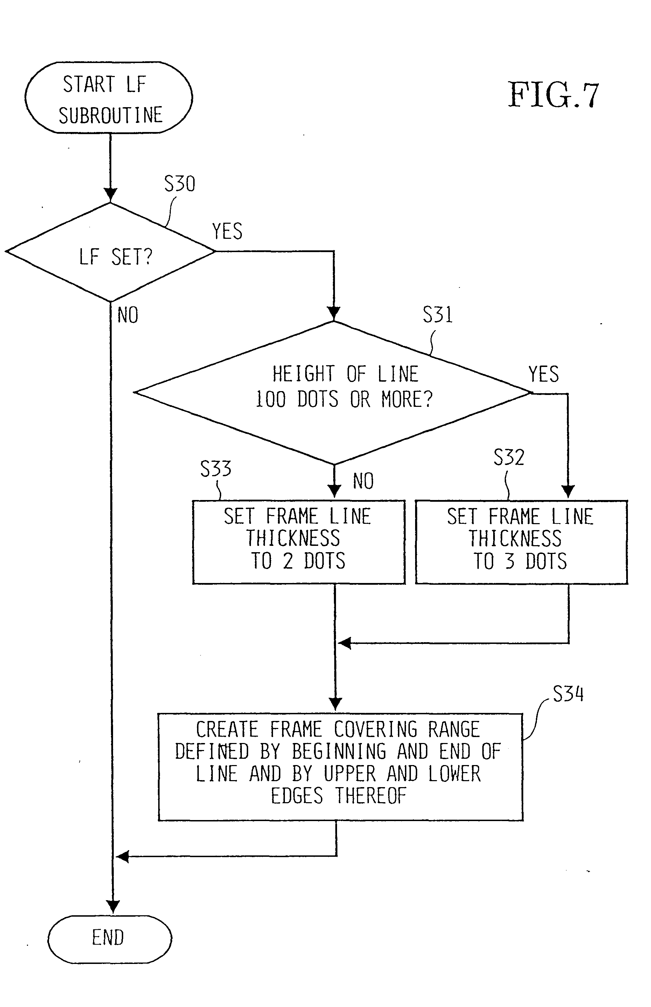

The operation of the LF subroutine is described with reference to Fig. 7. Fig. 7 is a flowchart showing how the local frame processing subroutine operates. Step S30 checks to see if the LF set flag 46 is set. If the LF set flag is found to be set (i.e., if the result of the check in step S30 is affirmative), step S31 is reached. Step S31 checks to see if the dot data forming the tallest character in the one-line dot data transferred to the print buffer 45 constitute a height of 100 dots or more. That is, a check is made to see if the biggest character in the longitudinal direction within the one-line dot data has a size of 100 dots or more.

If the maximum character size is found to be 100 dots or more (i.e., if the result of the check in step S31 is affirmative), step S32 is reached. Step S32 references the line width memory 42 and thereby sets to a three-dot width the thickness of the line for use in frame printing, before step S34 is reached. If the maximum character size is found to be less than 100 dots (i.e., if the result of the check in step S31 is negative), step S33 is reached. Step S33 sets to a two-dot width the thickness of the line for use in frame printing, and step S34 is reached.

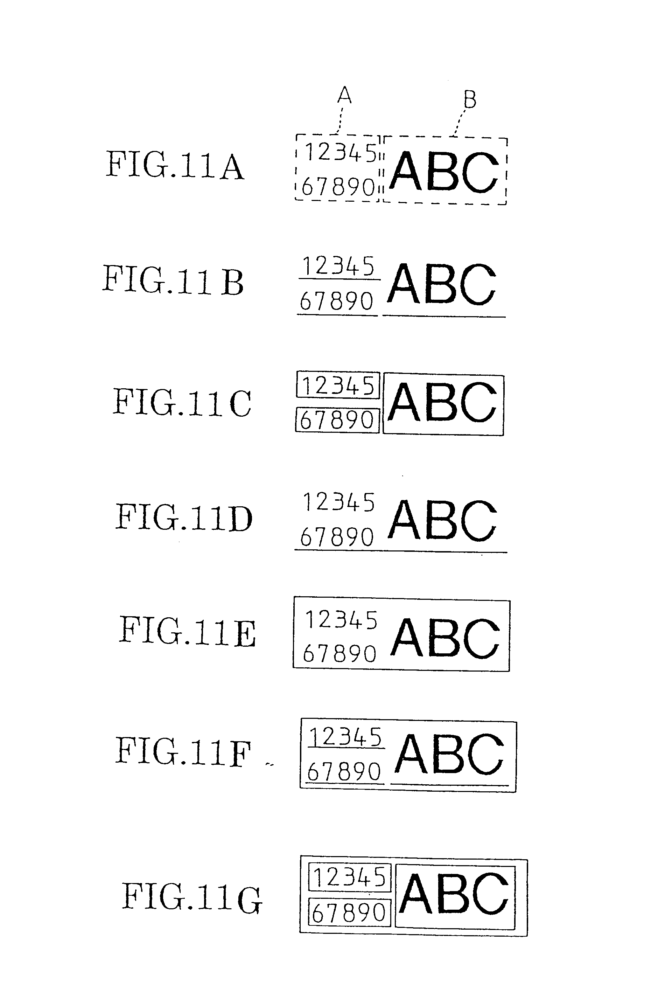

Step S34 creates within the print buffer 45 the frame covering the range defined by the beginning and the end of the above-mentioned one line as well as by the upper and lower edges thereof. This terminates the LF subroutine. At this point, if the LF subroutine is set for each line in the text, the frame will be formed on each text line as shown in Fig. 11C. If the result of the check in step S30 is negative, the LF subroutine is immediately terminated. In either case control returns to step S21 and continues to step S22.

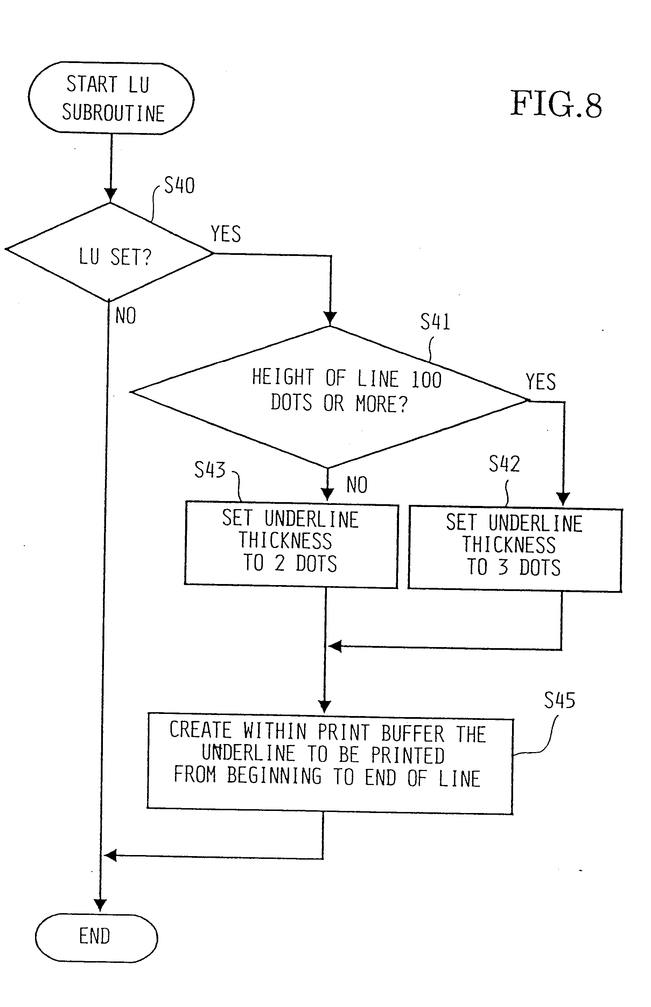

Afterthe LF subroutine is executed as described, step S22 calls the LU subroutine. The operation of the LU subroutine is described with reference to Fig. 8. Fig. 8 is a flowchart showing how the local underline processing subroutine operates. In step S40, a check is made to see if the LU set flag 46 is set. If the LU set flag is found to be set (i.e., if the result of the check in step S40 is affirmative), step S41 is reached. As with step S31, step S41 checks to see if the dot data composing the tallest character in the one-line dot data transferred to the print buffer 45 has a height of 100 dots or more.

If the maximum character size is found to be 100 dots or more (i.e., if the result of the check in step S41 is affirmative), step S42 is reached. Step S42 references the line width memory 42 and thereby sets to a three-dot width the thickness of the line for use in underline printing, before step S45 is reached. If the maximum character size is found to be less than 100 dots (i.e., if the result of the check in step S41 is negative), step S43 is reached. Step S43 sets to a two-dot width the thickness of the line for use in underline printing, and step S45 is reached.

Step S45 creates within the print buffer 45 the underline that will be printed under the above-mentioned line from the beginning to the end thereof. This terminates the LU subroutine. At this point, if the LU subroutine is set for each line in the text, the underline will be formed under each text line as shown in Fig. 11B. If the result of the check in step S40 is negative, the LU subroutine is immediately terminated. In either case, control returns to step S22 and continues to step S23.

Step S23 checks to see if all lines are finished. If not all lines are finished (i.e., if the result of the check in step S23 is negative), control returns to step S20. If all lines are found to be finished (i.e., if the result of the check in step S23 is affirmative), step S24 is reached. Step S24 checks to see if the current block is finished based on the presence or absence of the key input from the block feed key.

If the block is not finished (i.e., if the result of the check in step S24 is negative), control again returns to step S20. If the block is found to be finished (i.e., if the result of the check in step S24 is affirmative), step S25 is reached. In this manner, steps S20 through S24 involve executing the LF or LU subroutine, whichever is being selected, on each of the lines constituting the text.

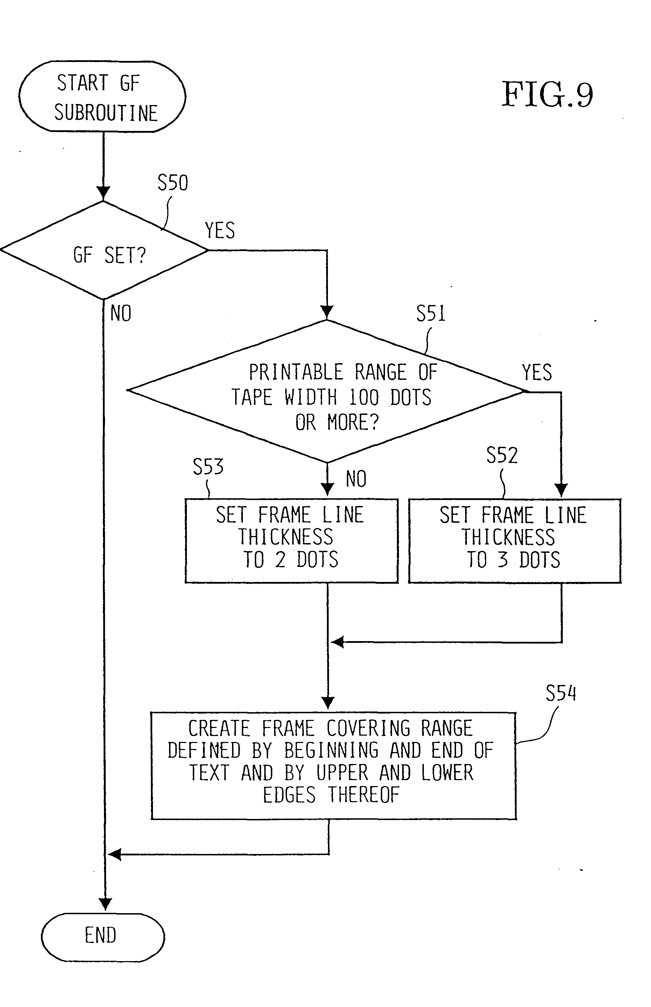

Step S25 calls the GF subroutine. The operation of GF subroutine is described with reference to Fig. 9. Fig. 9 is a flowchart showing how the global frame (GF) processing subroutine operates. In Fig. 9, step S50 checks to see if the GF set flag 46 is set.

If the GF set flag 46 is found to be set (i.e., if the result of the check in step S50 is affirmative), step S51 is reached. Step S51 checks the tape width memory 43 to see if the printable range of the tape width detected by the tape width detector K contains 100 dots or more. If the printable range is found to contain at least 100 dots (i.e., if the result of the check in step S51 is affirmative), step S52 is reached. Step S52 sets to a three-dot width the thickness of the line for use in frame printing, and step S54 is reached. If the printable range of the tape width does not contain 100 dots or more (i.e., if the result of the check in step S51 is negative), step S53 is reached. Step S52 sets to a two-dot width the thickness of the line for use in frame printing, before step S54 is reached.

Step S54 creates within the print buffer 45 the frame covering the range defined by the beginning and the end of the text as well as by the upper and lower edges thereof. At this point, a frame is formed over the entire text as shown in Fig. 11 E. This terminates the GF subroutine. If the result of the check in step S50 is negative, the GF subroutine is immediately terminated. In either case, control returns to step S25 and continues to step S26.

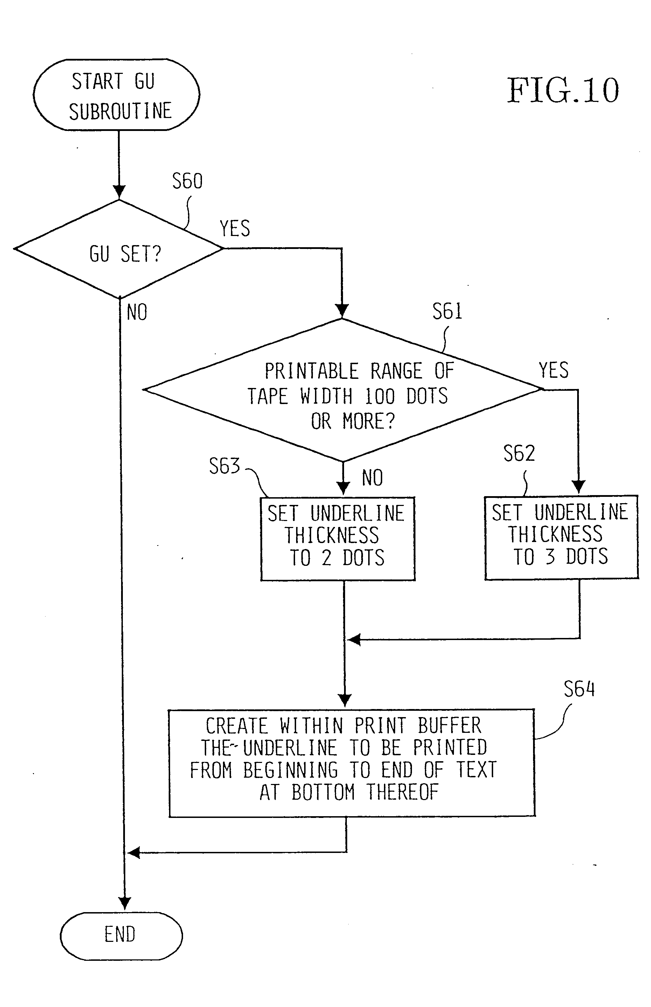

Step S26 calls the GU subroutine. The operation of GU is described with reference to Fig. 10. Fig. 10 is a flowchart showing how the global underline (GU) processing subroutine operates. In Fig. 10, step S60 checks to see if the GU set flag 46 is set. If the GU set flag 46 is found to be set (i.e., if the result of the check in step S60 is affirmative), step S61 is reached. Step S61 checks the tape width memory 43 to see if the printable range of the tape width detected by the tape width detector K contains 100 dots or more.

If the printable range of the tape width is found to contain at least 100 dots (i.e., if the result of the check in step S61 is affirmative), step S62 is reached. Step S62 sets to a three-dot width the thickness of the line for use in underline printing, before step S64 is reached. If the printable range of the tape width does not contain 100 dots or more (i.e., if the result of the check in step S61 is negative), step S63 is reached. Step S63 sets to a two-dot width the thickness of the line for use in underline printing, and step S64 is reached.

Step S64 creates within the print buffer 45 the underline that will be printed at the bottom of the text from the beginning to the end thereof. The underline has the width determined as described and covers the text as shown in Fig. 11 D. This terminates the GU subroutine. If the result of the check in step S60 is negative, the GU subroutine is immediately terminated. In either case, control returns to step S26 and continues to step S27. In the manner described, the global frame (GF) subroutine and global underline (GU) subroutine form an underline and/or a frame which cover the entire text.

Fig. 11 F illustrates an example in which both a local underline (LU) and a global frame (GF) are provided concurrently. Fig. 11 G gives an example in which both a local frame (LF) and a global frame (GF) are provided at the same time. Combining the LU, LF, GU and GF features in a suitable manner makes it possible to perform the desired underline or frame printing onto part or all of the text.

With the LU, LF, GU and GF subroutine executed as described, step S27 in Fig. 6 causes the content of the print buffer45 to be printed in dots onto the tape via the thermal head 11.

The above-described embodiment of tape printing apparatus first checks the line width memory 42 to see if the maximum character size in each text line is 100 dots or more upon a key input from the LU key 4A or the LF key 4 B on the keyboard 6. The width of the line for use in underline or frame printing is varied according to the result of the check. The underline or frame having the width thus determined is formed for each line. This allows localized underline or frame printing to be executed onto part of the text according to character size to be underlined or framed.

If the key input comes from the GU key 4C or the GF key 4D, the tape printing apparatus checks the tape width memory 43 to see if the printable range of the tape width contains 100 dots or more. The width of the line for use in underline or frame printing is varied according to the result oft he check. The underline or frame having the width thus determined is formed for the entire text. Thus global framing or underlining for the entire text may be carried out according to tape width.

The above-described embodiment of tape printing apparatus eliminates the complicated operations hitherto carried out to select the line width for underline or frame printing. Instead, a very simple series of operations makes it possible to print an underline or frame having an appropriate line width onto part or all of the text as desired. There are prevented any awkward discrepancies from occurring between the textual contents on the one hand, and the corresponding underline or frame printed onto the tape on the other. Thus the finished tape always has a good appearance.

Although the description above contains many specificities, these should not be construed as limiting the scope of the invention but as merely providing illustrations of the presently preferred embodiment of this invention. For example, the embodiment described above involves having the LU key 4A or LF key 4B operated to designate underline or frame modification to each line of the text. Alternatively, the local modification may be designated as to start from or to terminate in the current position of operation.

With the embodiment described above, the line width of the local underline or local frame is varied using the dot count of the biggest character in a given line. Alternatively, a table may be provided containing the data for defining line widths corresponding to a plurality of character print sizes. In this setup, an appropriate line width may be selected in accordance with suitable size designation data.

With the embodiment described above, the line width of the global underline or global frame is varied according to the signal from the tape width detector K indicating the printable range of the tape. Alternatively, a table may be provided wherein detection signals from the tape width detector K are made to correspond with line widths. In this setup, an appropriate line width may be selected based on a given detection signal.

The above-described embodiment of tape printing apparatus is capable of determining, upon printing, the print line width for use in underline or frame printing in correspondence with the size of input characters and the width of the tape to be used. This eliminates the need for the complicated selection of line widths and does away with the awkward discrepancy between characters and the corresponding underline or frame when printed A major benefit is that the finished tape with characters printed thereon always has a good appearance.

## Claims

1. A tape printing apparatus comprising:
character input means for inputting characters;
printing means for printing onto a tape the characters input through said input means;
designating means for designating at least a portion of the characters input through said character input means for printing in at least one of underline printing and frame printing;
detecting means for detecting a size of the characters of the portion designated by said designating means;
line width storing means for storing both the size of the characters input through said character input means and the line width for use in the at least one of underline printing and frame printing, the size of the at least one of underline printing and frame printing being arranged to correspond with the line width;
line width determining means for comparing the character size detected by said detecting means with the content of said line width storing means in order to determine, based on the result of the comparison, the line width to be used in the at least one of underline printing and frame printing; and
print control means for causing said printing means to perform the at least one of the underline printing and the frame printing on said portion of the characters in accordance with the line width determined by said line width determining means based on instructions from said designating means.

2. A tape printing apparatus as claimed in claim 1, further comprising tape width detecting means for detecting the tape width of the tape inserted into the tape printing apparatus, the tape printing apparatus being adapted to accommodate tapes of a plurality of different tape widths, and wherein the line width storing means are arranged to store both the plurality of tape widths and corresponding line widths for use in at least one of a further underline printing and frame printing, the line widths corresponding with the plurality of tape widths and the line width determining means is arranged to compare the tape widths detected by the tape width detecting means with the contents of the line width storing means in order to determine, based on the result of the comparison, the line width to be used in the at least one of the further underline printing and frame printing.

3. A tape printing apparatus as claimed in claim 1 or claim 2, wherein said character input means is adapted to allow characters to be input for a plurality of lines, said designating means is capable of designating at least one of said underline printing and frame printing for each of the lines input through said character input means and said print control means is arranged to cause said printing means to perform underline printing and/orframe printing on each line based on the instructions from said designating means.

4. A tape printing apparatus as claimed in claim 3, wherein said detecting means is arranged to detect the maximum character size in each of the lines designated by said designating means.

5. A tape printing apparatus comprising:
character input means for inputting characters;
printing means for printing the characters input through said input means onto a tape inserted into the tape printing apparatus, the tape printing apparatus being adapted to accommodate tapes of a plurality of different tape widths;
designating means for designating at least some of the characters input through said character input means for printing in at least one of underline printing and frame printing;
tape width detecting means for detecting the tape width of the inserted tape;
line width storing means for storing both the plurality of tape widths and corresponding line widths for use in at least one of underline printing and frame printing, the line widths corresponding with the plurality of tape widths;
line width determining means for comparing the tape width detected by said tape width detecting means with the content of said line width storing means in order to determine, based on the result of the comparison, the line width to be used in the at least one of underline printing and frame printing; and
print control means for causing said printing means to perform the at least one of underline printing and frame printing of the designated characters in accordance with the line width determined by said line width determining means based on instructions from said designating means.

6. A method of printing a block of characters with at least one of a local feature and a global feature onto a tape, the local feature comprising at least one of local underlining and local framing and the global feature comprising at least one of global framing and global underlining, the method comprising the steps of:
determining if at least one of a local feature flag and a global flag is set for the block of characters;
determining the size of the characters when the local feature is set flag;
determining a local line width based on the determined character size for the local feature corresponding to the set local feature flag;
determining the size of the tape when the global feature flag is set;
determining a global line width based on the determined tape size for the global feature corresponding to the set global feature flag; and
printing the block of characters onto the tape with at least one of the determined local line width and the determined global line width.

7. A method as claimed in claim 6, wherein a maximum character size is determined in the character size determination step.
